Europäisches Patentamt

European Patent Office

Office européen des brevets

(11) Numéro de publication: **0 119 943**
A1

## (12) DEMANDE DE BREVET EUROPEEN

(21) Numéro de dépôt: 84440005.1

(51) Int. Cl.³: **A 23 K 1/18, A 23 K 1/14**

(22) Date de dépôt: 21.02.84

(30) Priorité: 22.02.83 FR 8302976

(43) Date de publication de la demande: 26.09.84
Bulletin 84/39

(84) Etats contractants désignés: **AT BE CH DE GB IT LI LU NL SE**

(71) Demandeur: **Buchlin, Raymond, Z.A. Andlau - BP 28, F-67140 Barr (FR)**

(72) Inventeur: **Buchlin, Raymond, Z.A. Andlau - BP 28, F-67140 Barr (FR)**

(74) Mandataire: **Bossard, Jacques-René, CABINET ARBOUSSE BASTIDE 20 rue de Copenhague, F-67000 Strasbourg (FR)**

(54) **Aliment à base de céréales pour rongeurs.**

(57) Produit à base de céréales pour l'alimentation des petits animaux plus particulièrement des rongeurs, caractérisé en ce qu'il comporte, en poids, de 10 à 35% de blé, de 10 à 35% de gruau d'avoine, de 5 à 30% de maïs, de 5 à 40% d'orge, de 0 à 50% de son et de 0 à 0,1% de vitamine C, et caractérisé en ce que les céréales sont de préférence des céréales floconnées.

Application: élevage des cochons d'Inde et des lapins.

EP 0 119 943 A1

.1.

# ALIMENT A BASE DE CEREALES POUR RONGEURS.

La présente invention concerne un produit à base de céréales pour alimentation de petits animaux, plus particulièrement des rongeurs.

Il existe actuellement un problème non résolu dans le domaine de l'élevage des cochons d'inde, celui de l'alimentation. En effet, on a constaté chez les sujets nourris avec les granulés disponibles actuellement sur le marché : des maladies de peau non parasitaires, des troubles digestifs, voire même des décès pour lesquels les traitements vétérinaires étaient innefficaces. Les autopsies pratiquées sur les sujets décédés ont révélé des foies démesurés ayant entrainé le décès par compression des poumons.

Il est important de résoudre ce problème d'alimentation d'une part pour les éleveurs de cochons d'inde de concours et, pour les élevages de laboratoires pour lesquels la bonne santé des sujets est primordiale et d'autre part pour tous les propriétaires de cochons d'inde de compagnie qui ne trouvent pas, actuellement sur le marché, un aliment tout préparé et équilibré, conçu spécifiquement pour le cochon d'inde.

Ce problème d'alimentation a d'ailleurs été soulevé par les revues spécialisées, notamment dans : SELECTIONS AVICOLES N° 215 qui note : "... le système alimentaire conduit à des carences, à des déséquilibres

0119943

.2.

hyper-azotés, et il est peu favorable à la fonction caecotrophique indispensable aux léporidés".

En outre comme le mentionne cette même revue, toutes les femelles nourries exclusivement avec des granulés
sont devenues stériles.

Après étude de la nourriture disponible sur le
marché et étude des besoins alimentaires et des goûts des
rongeurs (notamment le cochon d'inde et le lapin), une nouvelle composition alimentaire a été spécialement conçue et
mise au point dans le but de donner une nourriture à la
fois adaptée aux besoins, aux goûts, et aux facultés digestives de l'animal.

Les tests alimentaires ont été effectués dans différents élevages. Sur les sujets nourris exclusivement à
l'aide de la nouvelle composition conforme à l'invention,
on n'a constaté aucune dermatose non parasitaire ni aucun
décès dû à des troubles gastro-intestinaux.

L'élaboration de la nouvelle composition conforme
à l'invention a été faite à partir des observations suivantes :

- le cochon d'inde, à la différence du lapin, ne
synthétise pas la vitamine C.

- les aliments disponibles actuellement dans le
commerce sont des aliments destinés aux lapins et trop riches
en protéines pour le cochon d'inde (origine de certaines dermatoses).

- les aliments disponibles sont présentés soit sous
forme de granulés, dans ce cas aux céréales de base sont
ajoutés des éléments de compactage (tels que la melasse) qui
sont nocifs pour les cochons d'inde, soit sous forme de mélanges de granulés et de céréales et dans ce cas il y a déséquilibre total de l'alimentation ; de plus, on constate dans
de nombreuses compositions la présence de grains entiers de
blé qui, non germés, déclenche des troubles gastro-intestinaux souvent nocifs (entérotoxémie).

.3.

- les rongeurs éprouvent des difficultés pour digérer l'amidon cru contenu dans les céréales entières.

En outre les éléments de base de l'alimentation du lapin et de l'alimentation du cochon d'inde étant identiques, la présente invention propose un produit pour l'alimentation équilibrée de petits animaux, plus particulièrement des rongeurs, caractérisé en ce qu'il comporte en poids, de 10 à 35 % de blé, de 10 à 35 % de gruau d'avoine, de 5 à 30 % de maïs, de 5 à 40 % d'orge, de 0 à 50 % de son et de 0 à 0,1 % de vitamine C.

Ces éléments naturels contiennent les principes chimiques au moyen desquels l'organisme des rongeurs fabrique, pendant le digestion, les vitamines nécessaires à leur métabolisme.

On comprendra mieux l'invention à l'aide de la description ci-après des différentes variantes de l'invention.

Pour composer le produit, on emploie de préférence des céréales, en flocons, ou floconnées, obtenues par des procédés de préparation connus de l'art antérieur. Ces procédés comportent les étapes successives de traitement à la vapeur, applatissage des grains, séchage.

L'emploi de céréales floconnées, dont l'amidon est plus facilement dégradable, a pour but de faciliter la digestion.

Au flocon d'avoine il faut préférer le gruau d'avoine car l'enveloppe du grain d'avoine n'est pas digestible par le suc gastrique et constitue un poids non utilisable dans ce produit.

On emploie des flocons de blé car le son n'a actuellement plus de valeur nutritive, mais on mélange le son aux céréales floconnées car il est riche en matières cellulosiques et connu pour la qualité des matières azotées, ses propriétés rafraichissantes et un peu laxatives. Le son a également pour but de faciliter l'adjonction de vitamines ou de sels minéraux en assurant une meilleure répartition de ces vitamines et

0119943

.4.

sels minéraux dans l'ensemble du mélange, car le son se présente sous forme de poudre (enveloppe des grains de blé réduite en fines particules).

Tous ces constituants sont utilisés pour obtenir par dosage approprié un aliment équilibré.

Selon une première variante de l'invention, on mélange pour 700 g de produit :

300 g de son (soit 43 % en poids)

200 g de flocons de blé (soit 29 % en poids)

100 g de flocons de gruau d'avoine (soit 14 % en poids)

50 g de flocons de maïs (soit 7 % en poids)

50 g de flocons d'orge (soit 7 % en poids).

Ce produit est destiné particulièrement à l'alimentation des cochons d'inde.

Pour ce type d'animal, il est nécessaire d'utiliser du blé floconné car cet animal ne digère par l'amidon contenu dans le blé cru.

Toute forme de présentation de blé germé peut être utilisée, on préfèrera la présentation sous forme de flocons pour des raisons de facilité d'emploi et de conservation.

Pour le maïs et l'orge, les flocons peuvent être obtenus à partir de grains non décortiqués sans que cela entraine de problèmes digestifs.

En ce qui concerne le mode d'utilisation de ce premier produit, on notera qu'une ration journalière, d'environ 45 à 50 g, mais pouvant varier avec l'appétit de l'animal, est généralement nécessaire.

Mais pour que l'alimentation du cochon d'inde soit complète, il faut y ajouter au cours de la journée un apport de vitamine C car l'animal ne synthétise pas cette vitamine. Cet apport pourra être fait à partir de tout légume vert frais (persil, feuille de chou,...).

Selon une deuxième variante de l'invention on mélange 700,14 g de produit :

0119943

.5.

300 g de son

200 g de flocons de blé

100 g de flocons de gruau d'avoine

50 g de flocons de maïs

50 g de flocons d'orge

0,14 g de vitamine C, sous forme de poudre par exemple, soit approximativement pour 1 kg de produit : 0,02 % de vitamine C.

Ce produit est donc un aliment équilibré et vitaminé pour l'alimentation des cochons d'inde.

Il sera plus particulièrement adapté pour l'alimentation des sujets malades, pour faciliter l'alimentation des élevages ou des animaux de compagnie pour supprimer le problème d'approvisionnement des aliments frais vitaminés.

Selon une troisième variante de l'invention, on mélange par Kg de produit :

300 g de flocons de gruau d'avoine (30 % en poids)

300 g de flocons d'orge (30 % en poids)

200 g de flocons de blé (20 % en poids)

200 g de flocons de maïs (20 % en poids).

Ce produit est plus particulièrement, mais non limitativement destiné aux élevages importants de lapins, donc situés en campagne ; dans ce type de cas l'éleveur peut se procurer facilement le fourrage, les racines, la verdure qu'il est nécessaire d'ajouter à la ration journalière de céréales.

Selon une quatrième variante de l'invention, on mélange pour 1,5 kilogrammes de produit :

300 g de flocons de gruau d'avoine (20 % en poids) 300 g de flocons d'orge (20 % en poids)

200 g de flocons de blé (13,3 % en poids)

200 g de flocons de maïs (13,3 % en poids)

500 g de son (33,4 % en poids).

Ce quatrième produit peut servir de base pour la confection d'un aliment équilibré par l'adjonction de sels

.6.

minéraux et/ou de luzerne. Ce produit peut être également utilisé seul lorsque le complément en minéraux est miscible à l'eau de boisson. Dans le cas où l'éleveur ne disposerait pas de luzerne mais simplement de foin ou de paille, la quantité de minéraux devra être augmentée.

On ne sortira pas du cadre de la présente invention en remplaçant par exemple un des constituants par un autre élément possédant des qualités nutritives équivalentes ou en ajoutant à l'une des compositions un ingrédient supplémentaire quelconque (une autre vitamine, sel minéral, produit vétérinaire, oligo-élément...) sans modifier les constituants de base, ou en destinant le produit à un autre animal que le cochon d'inde ou le lapin.

Bien entendu, étant donné la nature et la destination des produits, ces quantités optimales mesurées en gramme ne peuvent être respectées avec une grande précision lors de l'opération de mélange. La précision dépendra du dosage de la quantité totale de flocons mélangés, de la précision du mélangeur et de la qualité du brassage du mélangeur.

0119943

.7.

REVENDICATIONS

1. Produit à base de céréales pour l'alimentation des petits animaux, plus particulièrement les rongeurs, caractérisé en ce qu'il comporte, en poids, de 10 à 35 % de blé, de 10 à 35 % de gruau d'avoine, de 5 à 30 % de maïs, de 5 à 40 % d'orge, de 0 à 50 % de son et de 0 à 0,1 % de vitamine C.

2. Produit à base de céréales pour l'alimentation de petits animaux selon la revendication 1, caractérisé en ce que l'une au moins des céréales utilisées est présentée sous la forme de flocons.

3. Produit à base de céréales pour l'alimentation de petits animaux selon l'une quelconque des revendications 1 et 2, caractérisé en ce que le blé est du blé germé.

4. Produit à base de céréales pour l'alimentation de petits animaux selon l'une quelconque des revendications précédentes, caractérisé en ce qu'il comporte pour 700 g de produit :

300 g de son
200 g de flocons de blé
100 g de flocons de gruau d'avoine
50 g de flocons de maïs
50 g de flocons d'orge.

5. Produit à base de céréales pour l'alimentation de petits animaux selon l'une quelconque des revendications 1 à 3, caractérisé en ce qu'il comporte pour 700,14 g de produit :

300 g de son
200 g de flocons de blé
100 g de flocons de gruau d'avoine
50 g de flocons de maïs
50 g de flocons d'orge
0,14 g de vitamine C.

6. Produit à base de céréales pour l'alimentation de petits animaux selon l'une quelconque des revendications 1 à 3, caractérisé en ce qu'il comporte par Kg de produit :

0119943

.8.

300 g de flocons de gruau d'avoine

300 g de flocons d'orge

200 g de flocons de blé

200 g de flocons de maïs.

7. Produit à base de céréales pour l'alimentation de petits animaux selon l'une quelconque des revendications 1 à 3, caractérisé en ce qu'il comporte pour 1,5 kilogrammes de produit :

300 g de flocons de gruau d'avoine

300 g de flocons d'orge

200 g de flocons de blé

200 g de flocons de maïs

500 g de son.

Office européen
des brevets

RAPPORT DE RECHERCHE EUROPEENNE

0119943
Numéro de la demande

EP  84 44 0005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | COMMONWEALTH AGRICULTURAL BUREAU, résumé no. 73473875, 1N043-04059, NUTRITION ABS AND REV J. ANTAL: "Rearing calves on a complete pelleted feed to 90 days old" & POL'NOHOSPODARSTVO, vol. 18, no. 8, 1972, p. 673-679 * Résumé * | 1 | A 23 K   1/18<br>A 23 K   1/14 |
| A | GB-A-   27 980  (R. HYDE) A.D. 1909 * Page 2, lignes 3-14 * | 1 | |
| A | DE-A-2 462 501  (SOLO SUSICE) * Revendication * | 1 | |
| A | JOURNAL OF THE SCIENCE OF FOOD AND AGRICULTURE, vol. 29, no. 7, 1978, pages 640-648, Society of Chemical Industry, Oxford, GB D. SPREADBURY et al.: "A study of the need for fibre by the growing New Zealand white rabbit" * Page 640, résumé; page 641, tableau 1 * | 1 | DOMAINES TECHNIQUES RECHERCHES (Int. Cl. 3)<br><br>A 23 K |
| A | DE-A-2 914 407  (E. MÜLLER) | | |

-/-

Le présent rapport de recherche a été établi pour toutes les revendications

| Lieu de la recherche | Date d'achèvement de la recherche | Examinateur |
|---|---|---|
| LA HAYE | 01-06-1984 | DEKEIREL M.J. |

Office européen
des brevets

**RAPPORT DE RECHERCHE EUROPEENNE**

EP 84 44 0005

| | **DOCUMENTS CONSIDERES COMME PERTINENTS** | | Page 2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | SOVIET INVENTIONS ILLUSTRATED, semaine B30, 5 septembre 1979, résumé no. 55718B/30, Londres, GB & SU - A - 626 752 (RABBITS FUR ANIMALS) 14-08-1978 * Résumé * ----- | | |
| | | | DOMAINES TECHNIQUES RECHERCHES (Int. Cl. ³) |

Le présent rapport de recherche a été établi pour toutes les revendications

| Lieu de la recherche | Date d'achèvement de la recherche | Examinateur |
|---|---|---|
| LA HAYE | 01-06-1984 | DEKEIREL M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82